Europäisches Patentamt

European Patent Office

Office européen des brevets

(19)

(11) **EP 0 788 265 A2**

(12) **EUROPEAN PATENT APPLICATION**

(43) Date of publication:
**06.08.1997 Bulletin 1997/32**

(51) Int Cl.6: **H04L 27/26**

(21) Application number: **97300589.5**

(22) Date of filing: **30.01.1997**

(84) Designated Contracting States:
**DE FR GB**

(30) Priority: **31.01.1996 JP 38939/96**
**31.05.1996 JP 160801/96**

(71) Applicant: **VICTOR COMPANY OF JAPAN,**
**LIMITED**
**Kanagawa-ku Yokohama (JP)**

(72) Inventors:
• **Saiki, Takaaki**
**Yokosuka-shi, Kanagawa-ken (JP)**
• **Sugiyama, Kenji**
**Yokosuka-shi, Kanagawa-ken (JP)**

(74) Representative: **Senior, Alan Murray**
**J.A. KEMP & CO.,**
**14 South Square,**
**Gray's Inn**
**London WC1R 5LX (GB)**

(54) **Synchronisation in multicarrier systems**

(57) An OFDM modulator is disclosed which comprises a modulator for modulating an input symbol stream into OFDM modulated subcarrier signals and a circuit for including a level-raised reference subcarrier signal for each symbol in the OFDM subcarrier signals. The reference subcarrier signals are used for synchronization in an OFDM demodulator. Each of the reference subcarrier signals is assigned to the center subcarrier of the OFDM subcarrier signals. In OFDM demodulation, an AGC (automatic gain control) circuit controls the level of received OFDM modulated subcarrier signals at a raised tracking rate through the peak detection of reference subcarrier signals in the received OFDM modulated subcarrier signals.

*FIG. 5*

INPUT DATA

INPUT CIRCUIT ~400

R   I
IFFT ~402
R   I

GUARD INTERVAL ADDER ~404

D/A & LPF ~406

ORTHOGONAL MODULATOR ~410   0°   90°

IF GEN (CENTER CARRIER GENERATOR) ~508

⊕ ~510

FREQUENCY CONVERTER ~412

LEVEL ADJUSTER ~509

TRANSMITTER ~414

TRANSMISSION PATH

TRANSMISSION PATH

RECEIVER ~45?

FREQUENCY CONVERTER ~452

IF AMPLIFIER ~554

CARRIER DETECTOR ~555

IF GEN ~456   0°   90°

ORTHOGONAL DEMODULATOR ~458

A/D ~460

GUARD INTERVAL REMOVER ~462

FFT QAM DECODER ~464

OUTPUT CIRCUIT ~466

# Description

## BACKGROUND OF THE INVENTION

### 1. Field of the Invention

The present invention relates to a synchronizing system and method in the OFDM (orthogonal frequency division multiplex) modulation communication system.

### 2. Description of the Prior Art

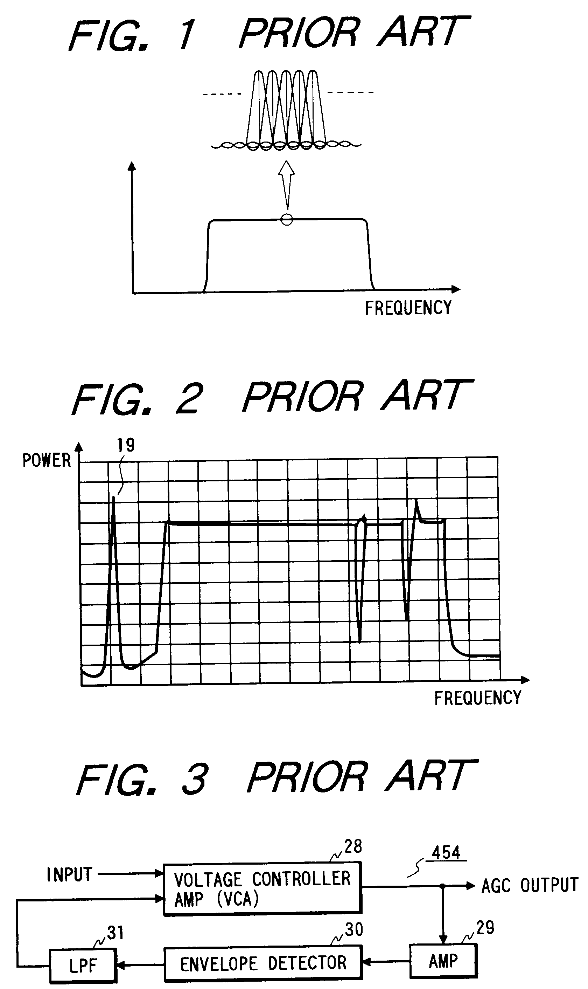

The OFDM is a digital modulation method permitting an audio or image signal to be effectively transmitted by including a multiplicity (e. g., 256 to 1024) of subcarriers in a single-channel frequency band. In a frequency spectrum of each channel in a conventional OFDM (see FIG. 1), the subcarriers are disposed at narrow and even frequency intervals. Thus, the wave form of OFDM modulated signal is almost the same as that of white noise, making it difficult to obtain information on the frequency or phase from the OFDM modulated signal and reproduce pilot carriers which are necessary for the demodulation.

Also, since the signal is multi-value QAMed in an OFDM system, information is carried in the amplitude of the demodulated signal. For this reason, the level of the demodulated signal has to be stabilized. A change in the demodulated signal level during a symbol period has to be kept as small as possible. In order to achieve this, a highly stable AGC (automatic gain control) circuit is necessary, which in turn needs a reference signal for the amplitude of the OFDM demodulated signal.

Some techniques have been proposed to solve the above mentioned problems.

One such technique is disclosed in the Proceedings of NHK Technical Laboratory Open Research, 1992, at pages 28-36. In this technique. an unmodulated subcarrier (or pilot carrier) 19 is added to the OFDM signal subcarriers in the transmitter side as shown in FIG. 2, and the frequency and the phase of the pilot carrier are detected to synchronize the whole OFDM subcarriers in frequency and phase for orthogonal demodulation in the receiver side.

Japanese Patent Unexamined Publication No. Hei7-95174 (1995) discloses a phase synchronizing technique without the need of any subcarriers. A phase synchronization of the whole system is achieved by detecting the phase difference between received data and a reference data with using operation result of receiver FFT (Fast Fourier Transform) and controlling the carrier frequency and phase of the orthogonal demodulator in the receiver through a voltage-controlled oscillator (VCO) on the basis of the detected phase difference. In this technique, there is no need of inserting any special reference carriers such as pilot signals in the modulator of the transmitter.

However, using a subcarrier outside of the OFDM spectrum for frequency and phase synchronization has the advantage that the subcarrier is hardly interfered by the other subcarriers but lowers the efficiency of frequency use. spoiling a major feature of the OFDM or a high efficiency of frequency use. Further, the outside subcarrier may affect adjacent other spectrum.

As for the technique in which phase synchronization is achieved with the result of FFT operation without using any subcarrier, frequency synchronization which is to be achieved before phase synchronization may be difficult, and there is a drawback that data necessary for phase synchronization is only obtained every operation cycle of FFT circuit.

As for the above mentioned AGC circuit. there is a conventional circuit as shown in FIG. 3. In this circuit. all the OFDM modulated waves have the envelope thereof detected by an envelope detector 30 to yield an OFDM level or AGC voltage, which is passed through a low pass filter (LPF) 31 with a sufficiently low cut-off frequency so as not to be affected by the modulated waves and which controls a voltage-controlled amplifier (VCA) 28.

However, since the time constant of the closed loop in the circuit can not made small, this circuit can not provide a stable and fast AGC to the OFDM modulated waves in which the modulation level may changes largely every symbol period.

## SUMMARY OF THE INVENTION

It is an object of the invention to provide an OFDM communication system which is capable of frequency and phase synchronization without being interfered by other subcarriers or degrading the efficiency of frequency use in the OFDM and which has an improved AGC characteristic.

The foregoing object is achieved by an OFDM modulator which comprises a modulator for modulating an input symbol stream into OFDM modulated subcarrier signals and a circuit for including a level-raised reference subcarrier signal for each symbol in the OFDM subcarrier signals. The reference subcarrier signals are used for synchronization in an OFDM demodulator.

In an illustrative embodiment, each of the reference subcarrier signals is assigned to the center subcarrier of the OFDM subcarrier signals.

An OFDM demodulator comprises an AGC (automatic gain control) circuit for controlling the level of received OFDM modulated subcarrier signals at a raised tracking rate through the peak detection of reference subcarrier signals in the received OFDM modulated subcarrier signals.

## BRIEF DESCRIPTION OF THE DRAWING

Further objects and advantages of the present invention will be apparent from the following description of the preferred embodiments of the invention as illustrated in the accompanying drawings. In the drawing,

FIG. 1 is a diagram showing a power spectrum of the modulated waves in a conventional OFDM communication system;

FIG. 2 is a diagram showing a power spectrum of the modulated waves including a pilot carrier in a conventional OFDM communication system;

FIG. 3 is a block diagram showing an arrangement of a conventional AGC circuit:

FIG. 4 is a block diagram showing an exemplary arrangement of a conventional OFDM transmitter/receiver;

FIG. 5 is a block diagram showing an illustrative embodiment of a OFDM modulating and demodulating system according to the present invention:

FIG. 6 is an exemplary spectrum of OFDM modulated signals according to the present invention;

FIG. 7 is an exemplary arrangement of the carriers in the embodiment of FIG. 5;

FIG. 8 is graphs showing OFDM demodulation by means of FFT (Fast Fourier Transform) ;

FIG. 9 is a diagram showing a constellation of the OFDM system in case of the presence of frequency deflection:

FIG. 10 is a block diagram showing, in a detailed form, the carrier detector or a reference carrier reproducing circuit using a PLL (phase locked loop) of the OFDM system of FIG. 5:

FIG. 11 is a block diagram showing, in a detailed form, the IF amplifier or an AGC circuit of the OFDM system of FIG. 5: and

FIG. 12 is a flow chart showing a series of operation for generating OFDM modulated subcarrier signals including a level-raised reference subcarrier signal.

## DETAILED DESCRIPTION OF THE PREFERRED EMBODIMENTS

To facilitate a better understanding of the present invention, a brief description of the conventional OFDM system will be provided. Then the departures provided by the present invention and illustrative embodiment of the invention will be described.

### Conventional OFDM System

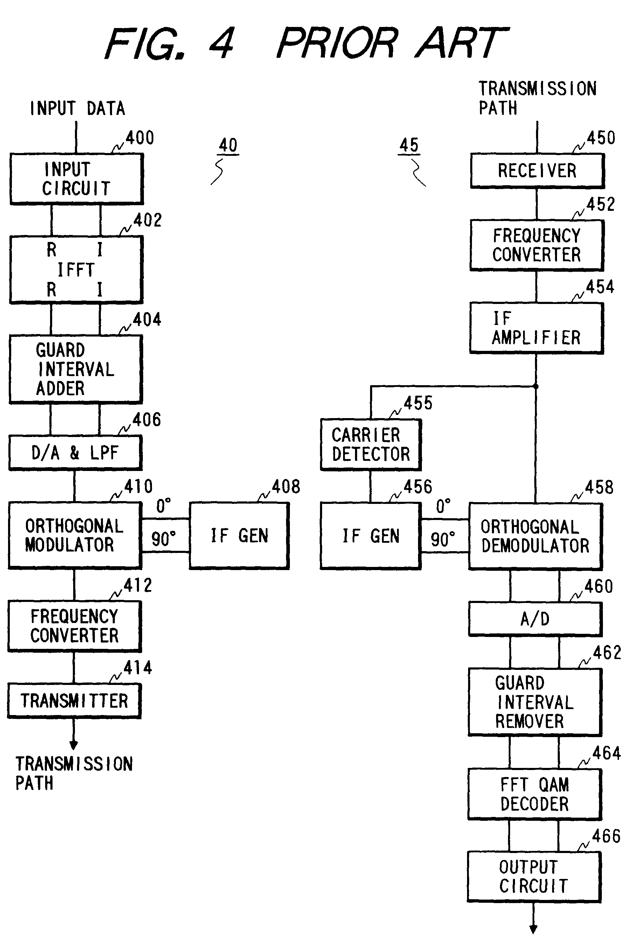

FIG. 4 is a block diagram showing an exemplary arrangement of a conventional OFDM transmitter 40 and receiver 45. In FIG. 4, the OFDM transmitter 40 comprises an input circuit 400 for converting an input data stream into low bit-rate complex symbol streams, an IFFT (Inverse Fast Fourier Transform) circuit 402, a guard interval adder 404 for adding guard intervals, and a D/A converter & LPF (low pass filter) 406 for converting the complex data stream into a base-band data stream, all of which are serially connected. The OFDM transmitter further comprises an IF (intermediate frequency) generator (IF GEN) 408 for generating IF signals, an orthogonal modulator 410 for orthogonally modulating the output of the element 406 with IF signals from the IF GEN 408 and providing OFDM modulated signals (including above mentioned pilot carriers), a frequency converter 412 having its input connected to the output of the orthogonal modulator 410 and a transmitter 414 for transmitting the output of the frequency converter 412 into the transmission path.

The OFDM receiver 45 comprises a receiver 450 for receiving a signal from the transmission path, a frequency converter 452 and an IF amplifier 454, which are connected in series. The receiver 45 further comprises a carrier detector 455 for detecting the pilot carriers in the output of the IF amplifier 454, an intermediate frequency signal generator (IF GEN) 456 for generating IF signals on the basis of the detected carriers. an orthogonal demodulator 458 for demodulating the output of the IF amplifier 454 with the IF signals from the IF GEN 456, an A/D converter (A/D) 460, a guard interval remover 462, an FFT (Fast Fourier Transform) QAM (quadrature amplitude modulation) decoder 464, and an output circuit 466 for providing a decoded output, the elements mentioned after the orthogonal demodulator 458 being connected in series. The detection of pilot carriers by the carrier detector 455 is achieved according to any of such technique as described above.

### OFDM System According to the Present Invention

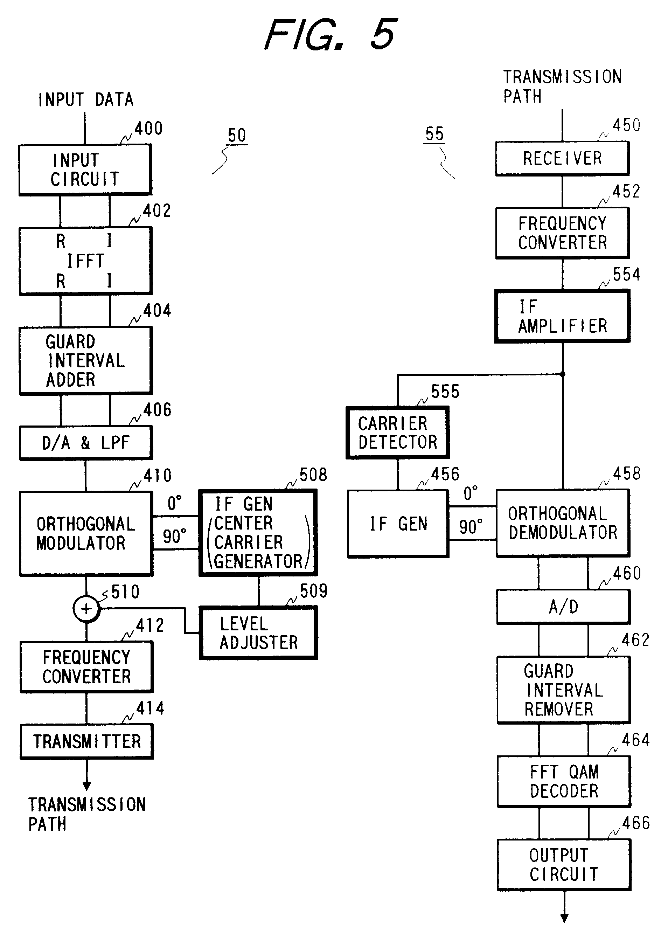

FIG. 5 is a block diagram showing an illustrative embodiment of a OFDM modulating and demodulating system according to the present invention. As seen from the comparison between FIGs. 4 and 5, the OFDM transmitters 50 and 40 are identical except that a signal adder 510 adds to the orthogonal modulator 410 output a center carrier which has been generated by an IF GEN 508 and level-adjusted by a level adjuster 509 in the OFDM transmitter 50; and the OFDM receivers 55 and 45 are identical except that the AGC circuit (IF amplifier) 454 and the carrier detector 455 have been replaced with an AGC circuit (IF amplifier) 554 and a carrier detector 555.

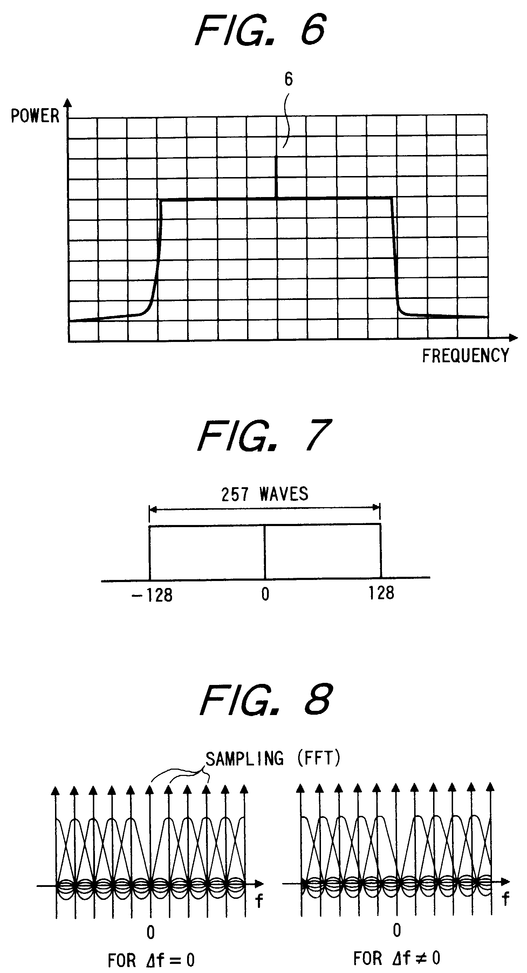

FIG. 6 is an exemplary spectrum of OFDM modulated signals of the OFDM system of FIG. 5. In FIG. 6, the horizontal axis indicates the frequency, the vertical axis indicates the power, and a subcarrier 6 is a center subcarrier. In the following description, it is assumed that the symbols are, e. g.. 256 QAMed every 2.6 ms with 257 subcarriers including a reference carrier which is the center subcarrier of the 257 subcarriers with a frequency of 10.7 7 MHz for example; the FFT size is 512 points; and the transmission band width is 100 KHz for example.

In operation, the input circuit 400 receives digital data to send and adds error correcting codes if necessary.

If the data comprises 4 bits, the data can be transmitted as a 16-level signal. In this example, each of the subcarriers have 16 levels defined in the amplitude direction and 16 levels defined in the angular direction. A method of transmitting information through 256 (= 16 x 16) combinations of amplitude and angle levels is called 256 QAM (quadrature amplitude modulation).

FIG. 7 shows an exemplary arrangement of the subcarriers in the OFDM spectrum of the embodiment of FIG. 5. In FIG. 7, a carrier arranged at the center frequency is called subcarrier 0 or the center subcarrier. The subcarriers on the right of the center carrier are called from the most central one subcarrier 1, subcarrier 2,....., subcarrier 128, and the subcarriers on the left of the center subcarrier are called from the most central one subcarrier -1, subcarrier -2 subcarrier -128.

In this embodiment, 248 subcarriers among the 257 carriers are used for information transmission. One of the remaining 9 subcarriers is used as a center subcarrier or a reference subcarrier for OFDM demodulation. The remaining 8 subcarriers are used for the calibration of received signal and the transmission of other auxiliary signals. Each of the 248 subcarriers used for information transmission is 256-QAMed with a byte (4 bits x 2) of information.

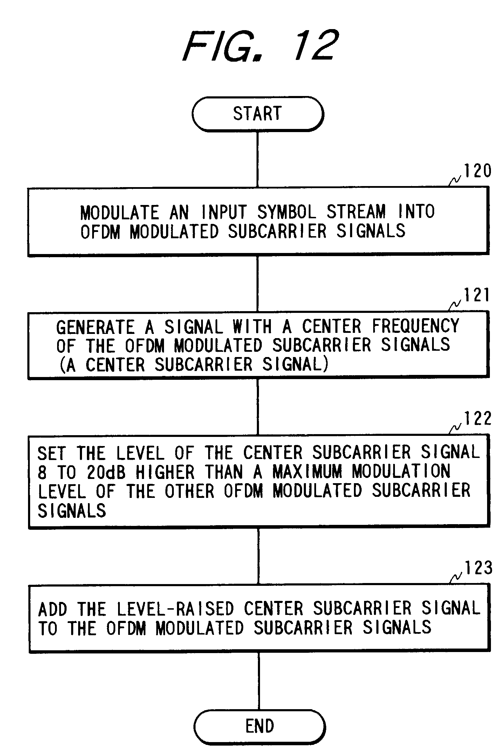

The IFFT circuit 402 applies a 256 QAM to each of the 248 subcarriers and provides a 256-QAMed output as a real (R) component and an imaginary (I) component. The R and I components have guard intervals added thereto by the guard interval adder 404 and converted into analog R and I signals and filtered by the D/A converter & LPF 406. The filtered analog R and I signals are supplied to the orthogonal modulator 410 and orthogonally modulated into an OFDM modulated signal as shown in step 120 of FIG. 12. FIG. 12 is a flow chart showing a series of operation for generating OFDM modulated subcarrier signals including a level-raised reference subcarrier signal.

The intermediate frequency signal generator (IF GEN) 508 generates IF signals and the center subcarrier signal with a frequency of subcarrier 0 in step 121. The center subcarrier or the synchronizing carrier has the level thereof adjusted by the level adjuster 509 to a constant level 8 to 20 dB higher than the maximum modulation level of the other subcarriers in step 122, and is supplied to the signal adder 510, which adds the level-adjusted center subcarrier to the OFDM modulated signal from the orthogonal modulator 410 in step 123.

The OFDM modulated signal has its frequency converted by the frequency converter 412 into a transmission frequency band, and is transmitted through the transmitter (a linear amplifier) 414 and an antenna (not shown).

We discuss how to dispose the reference subcarrier at the center of the subcarriers in the following. The reference carrier can be generally arranged in either of the following two ways.

One is a digital method in which the center carrier is generated by defining subcarrier 0 as carrier data not to be modulated in the IFFT stage. Though the center subcarrier can be generated without the need of any additional circuit in this digital method, the level of the center subcarrier which can be digitally defined is limited.

The other one is a analog method in which a level-adjusted clock signal with a frequency of the center subcarrier is add to the OFDM modulated signal from the orthogonal modulator 410. According to the analog method, the reference carrier can be set at a level higher than the digitally definable maximum subcarrier level if the phase jitter of the reference subcarrier reproduced in the OFDM receiver 55 has to be kept under a preset value by making larger the difference between the reference subcarrier level and the level of the other subcarriers. Therefore, the analog method has been adopted to the present embodiment.

In the OFDM receiver 55 of FIG. 5, the OFDM modulated signal is received and passed by the receiver 450 to the frequency converter 452, where the signal is converted to an IF signal, which is amplified by the IF amplifier 554. The output of the IF amplifier 554 is supplied to the carrier detector 555 and the orthogonal demodulator 458.

The carrier detector 555 supplies a synchronous signal to the IF GEN 456 in response to the IF amplifier 554 output. The IF GEN 456 generates and supplies an IF signal to the orthogonal demodulator 458. The orthogonal demodulator 458 demodulates the IF amplifier 554 output into rial (R) and imaginary (I) base band signals, which are converted by the A/D converter 460 into R and I digital signals, which have the guard intervals removed by the guard interval remover 462, and are passed to the FFT (QAM decoder) 464 and then to the output circuit 466, yielding a decoded output.

We discuss how the reference carrier is reproduced in OFDM demodulation in the following.

The demodulation of OFDM signal is achieved through FFT (Fast Fourier transform). This process is equivalent to sampling, along the frequency axis, the OFDM signal in which the spectra of $\sin(x)/x$ have been overlapped one another as shown in FIG. 8.

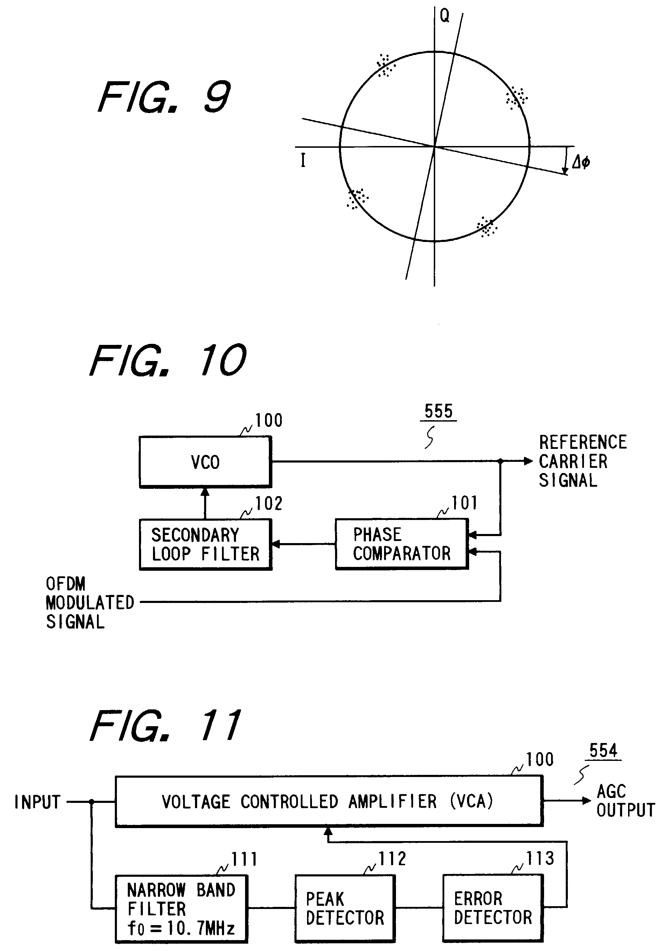

As seen from FIG. 8, if there is a deflection between the reference subcarrier in the transmitter 50 and the subcarrier reproduced in the OFDM receiver 55, the sampled signal will include other sub-band components, resulting in a displacement in the demodulated data. This means the collapse of the orthogonal relation between the I and Q axes and causes a rotation of the I and Q axes of a constellation as shown in FIG. 9. If the rotation exceeds a certain threshold, then errors will occur.

Assuming that the reproduced subcarrier deflection which begins causing data errors to occur to be E (rad) and that the deflection $\in$ is such that the I and Q axes reaches a threshold of the next areas on a constellation defined by the 256 QAM, we obtain $\in = \pi/48.\ 6$ (rad). Being converted into a period of time in the reference subcarrier frequency $f_0 = 10.7$ MHz, the value e is equivalent to $1/(10.7 \times 10^6) \times (\pi/48.\ 6)/2\pi = 0.\ 96$ ns. This means that the phase jitter of the reproduced reference subcarrier has to be limited to 0.96 ns.

Then we discuss the modulation level of the reference subcarrier to add to the OFDM modulated signal in the following.

If the reference subcarrier signals are reproduced by extracting only the reference subcarriers in a noisy input signal (OFDM modulated signal in this embodiment) by using a PLL (phase-locked loop) as shown in FIG. 10. the phase jitter is logically obtained by the following equation:

$$\delta\phi^2 = No * Bi/A^2, \tag{1}$$

where No is an input noise spectrum, Bi is an input noise band, and $A^2$ is the noiseless signal power.

The ratio of input signal to noise, $\alpha$, is defined as:

$$\alpha = A^2/(No * Bi) \tag{2}$$

From equations (1) and (2), $\delta\phi$ is expressed with $\alpha$ as follows:

$$\delta\phi = \alpha^{-0.5} \tag{3}$$

Therefore, for $\delta\phi = \pi/48.6$, we obtain

$$\alpha = 239 \ (23.8 \ dB). \tag{4}$$

In order to find the modulation level of the reference subcarriers to add, we will calculate the average power of 256-QAM OFDM signal and the average power per subcarrier in the following.

Considering 256 QAM, 512 FFT size and 257 subcarriers, and assuming that each of I and Q phases takes any of the values ±1, ±3, ±5, ±7, ±9, ±11, ±13, and ±15 which will occur with the same probability, we obtain the average power Eave:

$$Eave = 0.083 \tag{5}$$

Regarding Eave as the input noise spectrum density, since the transmission band is 100 KHz, it follows that

$$No = 8.3 \times 10^{-7}. \tag{6}$$

Also, assume that when each of the I and Q phases of a subcarrier takes the maximum value +15 (the maximum value that the 512-point IFFT can provide) the voltage level of the subcarrier becomes 0 dB. then the noiseless signal power is expressed as

$$A^2 = 8.58 \times 10^{-4}. \tag{7}$$

Equation (2) can be written $A^2 = \alpha * No * Bi$. Replacing Bi with the noise band of the PLL loop, BL, we obtain

$$A^{2'} = \alpha * No * BL. \tag{8}$$

Substituting the values of equation (4) and (6) and BL = 10 (Hz) in equation (8) gives

$$A^{2'} = 1.98 \times 10^{-3}. $$

Thus it follows $A^{2'}/A^2 = 2.31$. Therefore, in order to realize equation (4) it is necessary to set the voltage level of the reference subcarrier for at least 7.3 dB.

We have calculated the reference subcarrier level on the assumption that the cause of degradation in the error rate lies only in the phase jitter of the reference subcarriers, However, there are other causes in fact. For this reason, assuming that the allowable phase jitter is a half of the above mentioned value $\in = \pi/48.6$, a series of above described calculations for the subcarrier level to add yields 19.3 dB.

The phase jitter can be limited to a target level with a lower reference subcarrier level by narrowing the noise band of the PLL loop. However. setting the noise band of the PLL loop for less than 10 Hz will lead to a degradation of lock range characteristic. From this point of view, the reference subcarrier level is preferably at least 15 dB.

Here we discuss the problem of an increase in the average power of all the OFDM modulated signals with an increase in the reference subcarrier level. The power of all the OFDM modulated signals with an increase of 20 dB in voltage in the modulation level of only one of the 257 subcarriers results in an increase of only about 4 %. Thus, an increase of 20 dB in voltage in the reference subcarrier level is so small that it cause no problem.

FIG. 11 is a block diagram showing an exemplary arrangement of the IF amplifier (an AGC circuit) 554 of the OFDM system of FIG. 5. In FIG. 11, a narrow band filter 111 (such as a crystal filter) whose center frequency equals the frequency of the reference subcarriers extracts information on the reference subcarrier amplitude from the OFDM modulated signals. A peak detector 112 detects a peak value from the information from the filter 111. An error detector 113 provides a voltage-controlled amplifier (VCA) 110 with an error signal based on the comparison between the peak value and a predetermined value. The error signal is so controlled as to raise the gain of the VCA if the peak value is lower than the predetermined value and to lower the gain if the peal value is higher than the predetermined value.

Since the reference subcarrier level has been set 15 dB higher than the other subcarriers as described above, the VCA is controlled at a raised speed through peak detection without the need of envelop detection as is done in the prior art.

As described above, the reference subcarrier level has to be set at least about 8 dB higher than the other subcarriers but is preferably set less than 20 dB in order to limit the increase in the total power of OFDM signals to less than 4 %. Thus, it is preferable to set the reference subcarrier level 8 to 20 dB higher than the other subcarriers.

It should be noted that though the reference subcarrier has been assigned to the center subcarrier of the subcarriers in the above illustrative embodiment, the reference subcarrier may be assigned to any of the subcarriers.

Many widely different embodiments of the present invention may be constructed without departing from the spirit and scope of the present invention. It should be understood that the present invention is not limited to the specific embodiments described in the specification, except as defined in the appended claims.

## Claims

1. An OFDM modulator which facilitates the detection of reference subcarrier signals in OFDM modulated subcarrier signals in a OFDM demodulator, the OFDM modulator comprising:

    means for modulating an input symbol stream into said OFDM modulated subcarrier signals; and
    means for including a level-raised reference subcarrier signal for each symbol in said OFDM modulated subcarrier signals.

2. An OFDM modulator as defined in claim 1, wherein said means for including a level-raised reference subcarrier signal comprises:
    means for adding a level-raised center subcarrier signal for each symbol to said OFDM modulated subcarrier signals.

3. An OFDM modulator as defined in claim 2, wherein said means for adding a level-raised center subcarrier signal includes:
    means for setting the level of said level-raised center subcarrier signal 8 to 20 dB higher than a maximum modulation level of the other OFDM modulated subcarrier signals.

4. An OFDM modulator as defined in claim 2, wherein said means for adding a level-raised center subcarrier signal comprises:

    means for generating a signal with a center frequency of said OFDM modulated subcarrier signals, that is, a center subcarrier signal:
    means for setting the level of said center subcarrier signal 8 to 20 dB higher than a maximum modulation level of the other OFDM modulated subcarrier signals to output said level-raised center subcarrier signal; and
    means for adding said level-raised center subcarrier signal to said OFDM modulated subcarrier signals.

5. An AGC circuit for use in an OFDM demodulator, comprising:

    means for detecting peak values of level-raised reference subcarrier signals in OFDM modulated subcarrier signals: and
    means operative on the basis of a comparison between said peak values and a predetermined value for controlling the level of said OFDM modulated subcarrier signals at a raised tracking rate.

6. An OFDM demodulator having an improved AGC characteristic, comprising:

    means for detecting peak values of level-raised reference subcarrier signals in OFDM modulated subcarrier signals; and
    means operative on the basis of a comparison between said peak values and a predetermined value for controlling the level of said OFDM modulated subcarrier signals at a raised tracking rate.

7. An OFDM modulating method which facilitates the detection of reference subcarrier signals in OFDM modulated subcarrier signals in a OFDM demodulator, the method comprising the steps of:

    modulating an input symbol stream into said OFDM modulated subcarrier signals: and
    including a level-raised reference subcarrier signal for each symbol in said OFDM modulated subcarrier signals.

8. A method as defined in claim 7, wherein said step of including a level-raised reference subcarrier signal comprises the step of:
    adding a level-raised center subcarrier signal for each symbol to said OFDM modulated subcarrier signals.

9. A method for facilitating the synchronization of reference subcarrier signals in an OFDM communication system, the method comprising the steps of:

generating a signal with a center frequency of OFDM modulated subcarrier signals, that is, a center subcarrier signal:

setting the level of said center subcarrier signal 8 to 20 dB higher than a maximum modulation level of the other OFDM modulated subcarrier signals to output a level-raised center subcarrier signal; and

means for adding said level-raised center subcarrier signal to said OFDM modulated subcarrier signals.

10. A method as defined in claim 9, further comprising the steps of:

detecting peak values of said level-raised reference subcarrier signal in said OFDM modulated subcarrier signals; and

controlling the level of said OFDM modulated subcarrier signals at a raised tracking rate on the basis of a comparison between said peak values and a predetermined value.

# FIG. 1   PRIOR ART

FREQUENCY

# FIG. 2   PRIOR ART

POWER

19

FREQUENCY

# FIG. 3   PRIOR ART

INPUT → VOLTAGE CONTROLLER AMP (VCA) `28` → `454` → AGC OUTPUT

LPF `31` ← ENVELOPE DETECTOR `30` ← AMP `29`

EP 0 788 265 A2

# FIG. 4 PRIOR ART

INPUT DATA

TRANSMISSION PATH

**40**

**45**

| | |
|---|---|
| INPUT CIRCUIT — 400 | RECEIVER — 450 |
| IFFT (R I / R I) — 402 | FREQUENCY CONVERTER — 452 |
| GUARD INTERVAL ADDER — 404 | IF AMPLIFIER — 454 |
| D/A & LPF — 406 | |

ORTHOGONAL MODULATOR — 410  0° / 90°  IF GEN — 408

CARRIER DETECTOR — 455

IF GEN — 456  0° / 90°  ORTHOGONAL DEMODULATOR — 458

FREQUENCY CONVERTER — 412

A/D — 460

TRANSMITTER — 414

GUARD INTERVAL REMOVER — 462

TRANSMISSION PATH

FFT QAM DECODER — 464

OUTPUT CIRCUIT — 466

# FIG. 5

INPUT DATA

```
         ┌──────────────┐  400
         │   INPUT      │
         │  CIRCUIT     │
         └──────────────┘
                          50
         ┌──────────────┐  402
         │  R      I    │
         │     IFFT     │
         │  R      I    │
         └──────────────┘
         ┌──────────────┐  404
         │   GUARD      │
         │  INTERVAL    │
         │   ADDER      │
         └──────────────┘
         ┌──────────────┐  406
         │  D/A & LPF   │
         └──────────────┘
         ┌──────────────┐  410        ┌──────────────┐  508
         │              │ 0°          │   IF GEN     │
         │ ORTHOGONAL   │─────────────│  (CENTER     │
         │ MODULATOR    │ 90°         │   CARRIER    │
         │              │─────────────│  GENERATOR)  │
         └──────────────┘             └──────────────┘
              (+)  510                 ┌──────────────┐  509
                         412           │   LEVEL      │
         ┌──────────────┐              │  ADJUSTER    │
         │  FREQUENCY   │              └──────────────┘
         │  CONVERTER   │
         └──────────────┘
         ┌──────────────┐  414
         │ TRANSMITTER  │
         └──────────────┘
```

TRANSMISSION PATH

TRANSMISSION PATH

```
         ┌──────────────┐  450
         │  RECEIVER    │
         └──────────────┘
                          55
         ┌──────────────┐  452
         │  FREQUENCY   │
         │  CONVERTER   │
         └──────────────┘
         ┌──────────────┐  554
         │   IF         │
         │  AMPLIFIER   │
         └──────────────┘
  ┌──────────────┐  555
  │  CARRIER     │
  │  DETECTOR    │
  └──────────────┘
  ┌──────────┐  456      ┌──────────────┐  458
  │          │ 0°        │              │
  │  IF GEN  │───────────│ ORTHOGONAL   │
  │          │ 90°       │ DEMODULATOR  │
  └──────────┘───────────│              │
                         └──────────────┘
                         ┌──────────────┐  460
                         │     A/D      │
                         └──────────────┘
                         ┌──────────────┐  462
                         │   GUARD      │
                         │  INTERVAL    │
                         │  REMOVER     │
                         └──────────────┘
                         ┌──────────────┐  464
                         │  FFT QAM     │
                         │  DECODER     │
                         └──────────────┘
                         ┌──────────────┐  466
                         │   OUTPUT     │
                         │  CIRCUIT     │
                         └──────────────┘
```

## FIG. 6

POWER

6

FREQUENCY

## FIG. 7

257 WAVES

−128    0    128

## FIG. 8

SAMPLING (FFT)

0

FOR $\Delta f = 0$

0

FOR $\Delta f \neq 0$

f

f

11

## *FIG. 9*

## *FIG. 10*

## *FIG. 11*

# *FIG. 12*

START

120

MODULATE AN INPUT SYMBOL STREAM INTO
OFDM MODULATED SUBCARRIER SIGNALS

121

GENERATE A SIGNAL WITH A CENTER FREQUENCY
OF THE OFDM MODULATED SUBCARRIER SIGNALS
(A CENTER SUBCARRIER SIGNAL)

122

SET THE LEVEL OF THE CENTER SUBCARRIER SIGNAL
8 TO 20dB HIGHER THAN A MAXIMUM MODULATION
LEVEL OF THE OTHER OFDM MODULATED SUBCARRIER
SIGNALS

123

ADD THE LEVEL-RAISED CENTER SUBCARRIER SIGNAL
TO THE OFDM MODULATED SUBCARRIER SIGNALS

END